# EUROPEAN PATENT SPECIFICATION

(11) **EP 2 898 410 B1**
(45) Date of publication and mention of the grant of the patent: **27.04.2022**
(21) Application number: 13770602.4
(22) Date of filing: 17.09.2013
(51) Int. Cl.: G06F 9/50

(54) **AUTOMATED PROFILING OF RESOURCE USAGE**
AUTOMATISIERTE PROFILIERUNG EINER RESSOURCENNUTZUNG
PROFILAGE AUTOMATISÉ D'UTILISATION DE RESSOURCES

(30) Priority: 20.09.2012 US 201213623845; 20.09.2012 US 201213623847
(43) Date of publication of application: 29.07.2015
(73) Proprietor: Amazon Technologies, Inc., Reno, NV 89507 (US)
(72) Inventor: MARR, Michael, David, Seattle, WA 98109-5210 (US); KLEIN, Matthew, D., Seattle, WA 98109-5210 (US)
(74) Representative: D Young & Co LLP
(86) International application number: PCT/US2013/060200
(87) International publication number: WO 2014/047073

(56) References cited:
- US-A1- 2009 265 707
- US-A1- 2010 058 352
- US-A1- 2010 082 320
- US-A1- 2010 262 964
- US-A1- 2010 281 482
- US-A1- 2010 306 382
- US-A1- 2010 332 658
- US-A1- 2012 204 176
- US-B1- 8 099 487

## Description

### BACKGROUND

Generally described, computing devices utilize a communication network, or a series of communication networks, to exchange data. Companies and organizations operate computer networks that interconnect a number of computing devices to support operations or provide services to third parties. The computing systems can be located in a single geographic location or located in multiple, distinct geographic locations (e.g., interconnected via private or public communication networks). Specifically, data centers or data processing centers, herein generally referred to as "data centers," may include a number of interconnected computing systems to provide computing resources to users of the data center. The data centers may be private data centers operated on behalf of an organization or public data centers operated on behalf, or for the benefit of, the general public.

To facilitate increased utilization of data center resources, virtualization technologies may allow a single physical host computing device to host one or more instances of virtual machine instance configurations that appear and operate as independent computing devices to users of a data center. With virtualization, the single physical host computing device can create, maintain, delete, or otherwise manage virtual machine instances in a dynamic manner. In turn, users can request single computing devices or a configuration of networked computing devices, and be provided with varying numbers of virtual machine resources.

The computing resources provided by the host computing devices may include computing capacity, memory and other storage, bandwidth, and the like. In a data center environment with thousands of host computing devices, an instance of a virtual machine may be instantiated on a random host computing device so long as the target host computing device meets specified criteria such as sufficient and available computing device resources (e.g., processing units, memory, and the like). Once an instance of a virtual machine is instantiated on a physical host computing device, a predetermined amount of one or more computing resources may be reserved for use by the virtual machine instance. A computing resource provider or other operator of the data center environment may guarantee availability, to the virtual machine instance, of the reserved amounts of computing resources on the target computing device. US 2010/0082320 discloses a system for improving accuracy in a prediction of resource usage of an application running in a virtual environment. US2010/0281482 A1 discloses a system and method in which performance and capacity statistics, with respect to an application executing on one or more VMs, may be accessed and collected. The collected performance and capacity statistics may be analyzed to determine an improved hardware profile for efficiently executing the application on a VM

### BRIEF DESCRIPTION OF DRAWINGS

Throughout the drawings, reference numbers may be re-used to indicate correspondence between referenced elements. The drawings are provided to illustrate example embodiments described herein and are not intended to limit the scope of the disclosure.
FIG. 1 is a block diagram of an illustrative network computing environment including a management component, multiple host computing devices, and multiple customers.
FIG. 2 is a block diagram of an illustrative management component including various modules and storage components.
FIG. 3 is a flow diagram of an illustrative process for automatically profiling computing resource usage.
FIG. 4 is a block diagram of an illustrative host computing device hosting virtual machines which utilize computing resources provided by the computing device.
FIG. 5 is a flow diagram of an illustrative process for launching virtual machines on host computing devices, allocating and oversubscribing computing resources, and migrating currently executing virtual machines in order to further optimize computing resource utilization.
FIG. 6 is a block diagram of an illustrative host computing device in which various computing resources are oversubscribed and excess capacity remains available.
FIG. 7 is a block diagram of an illustrative host computing device in which various computing resources are substantially oversubscribed due to minimal resource utilization of each virtual machine executing on the host computing device.
FIG. 8 is a block diagram of an illustrative migration of a virtual machine from one host computing device to another host computing device due to oversubscription and a lack of available computing resource capacity.

### Detailed Description

Generally described, the present disclosure relates to computing resource utilization. Specifically, the disclosure relates to automatically determining resource usage and operating metric profiles for consumers of computing resources based on an analysis of actual resource usage measurements and other operating metrics. An instance of a virtual machine that may be instantiated according to customer specifications (e.g.: a virtual machine instance instantiated from a virtual machine image configured with an operating system and application software according to customer specifications), is instantiated on a host physical computing device. The virtual machine instance consumes various computing resources based on the execution of one or more computer software programs or other workloads by the virtual machine instance. The virtual machine instance can then terminate execution or otherwise be configured for a different purpose.

For specific entities, such as a customer or set of customers, the process of instantiating virtual machine instances may be repeated. As part of processing the lifecycle of the virtual machine instance, a service provider associated with providing the virtual machine instances can observe and record resource consumption. The service provider can then determine a virtual machine instance resource usage and operating metric profile based on processing resource consumption measurements and other operating metric information.

Additional aspects of the disclosure relate to generalizing the resource usage and operating metric profiles, generally referred to as operating profiles. For example, thousands or more of virtual machine instances may be instantiated and may utilize resources in a single network computing environment, such as a data center. Rather than determining and maintaining separate customized operating profiles for each virtual machine instance, virtual machine instances may be assigned to generalized or default operating profiles. Accordingly, groups of virtual machine instances may be categorized according to a variety of organizational criteria and assigned to the same operating profile. In some cases, the operating profiles may be hierarchical, such that a particular virtual machine instance configuration is associated with a particular operating profile, and also with a more general operating profile that is itself associated with multiple virtual machine instance configurations. There may be multiple levels to the hierarchy, with potentially thousands of virtual machine instance configurations associated with a single general operating profile or a small number of top-level operating profiles, and a larger number of more specific operating profiles at each level within the hierarchy. At the bottom level of the hierarchy may be a particular operating profile associated with a single virtual machine instance configuration as used by a particular customer.

Further aspects of the disclosure relate to identifying a target host computing device to provide computing resources to virtual machine instances based on an automatically determined operating profile. In some examples, particular physical host computing devices may be configured to provide target computing resources to multiple virtual machine instances concurrently. A predetermined amount of a computing resource may be reserved for use by a single virtual machine instance. When the operating profile for a virtual machine instance indicates that the virtual machine instance will not likely consume computing device resources that have been reserved for the instance, the host computing device may instantiate additional virtual machine instances. The additional virtual machine instances may be associated with, or have access to, host computing device resources concurrently with the previously instantiated virtual machine instances. Additionally, if any of the virtual machine instances consumes or otherwise restricts access to a resource such that the consumption meets or exceeds one or more thresholds specified in an operating profile for the virtual machine instance, one or more of the virtual machine instances may be transferred to another host computing device. For example, the virtual machine instance associated with consumption that exceeds a threshold may be transferred, or other virtual machine instances may be transferred.

Some computing resources are not necessarily provided by the host computing devices, but rather are off-host resources. For example, network topology may require communications from one host computing device to a second host computing device to traverse one or more links (e.g., network connections between switches and other network components). The number of links may be different for communications to a third host computing device. Data regarding link traffic and the number of links that communications will traverse between hosts may be recorded as a resource consumption measurement or operating metric. The data may be used in the future to determine on which host computing device to instantiate a virtual machine instance that may communicate with another host computing device. In addition, consumption of some computing resources does not necessarily reduce the amount of the resource that is available for other virtual machine instances or consumers generally. For example, a feature provided by a host computing device, such as a particular instruction set, may be generally referred to as a computing resource. Usage of the instruction set, however, does not necessarily reduce availability of the instruction set to another virtual machine instance, application, or other consumer.

While computing resources such as memory, CPU capacity, and network bandwidth will be used as the illustrative computing resources, other computing resources may be substituted, such as network link traffic, latency, processor instruction sets, and the like. Further, although various aspects of the disclosure will be described with regard to illustrative examples, one skilled in the art will appreciate that the disclosed examples should not be construed as limiting. The invention is defined in the claims. Various aspects of the disclosure will now be described with regard to certain examples which are intended to illustrate but not limit the disclosure.

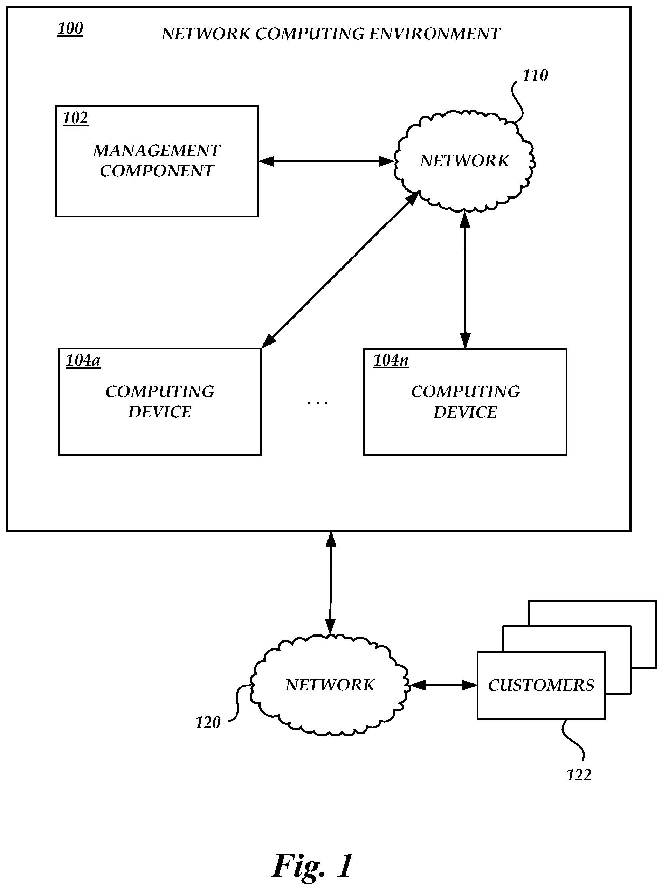

FIG. 1 illustrates an example network computing environment 100 in which automated profiling of resource usage and assignment of resources based on those profiles may be implemented. Operating profiles and assignment of resources can be based on prior measurements of actual resource usage and other operating metrics, and also on expected future usage of resources. A network computing environment 100 can include a management component 102 and any number of physical host computing devices 104a - 104n in communication via a network 110. One or more customers 122 may communicate with the components of the network computing environment 100 via a network 120.

Network computing environments 100 such as the one illustrated in FIG. 1 may be implemented in data centers and other environments in which multiple host computing devices 104a - 104n provide computing services and resources to internal or external customers 122. As described in more detail below, each customer 122 may connect to the management component 102 or some other component within the network computing environment 100 to initiate computing processes. The initiation of computing processes includes instantiation of a virtual machine instance on a host computing device 104. The virtual machine instance may execute on behalf of the user, consuming computing resources of the host computing device 104, network 110, and the like.

Each host computing device 104 may be a server computer, such as a blade server. Optionally, a host computing device 104 may be a midrange computing device, a mainframe computer, a desktop computer, or any other computing device configured to provide computing services and resources to multiple consumers, such as virtual machine instances, concurrently. In a typical implementation, a host computing device 104 can be configured to communicate with other host computing devices 104, a management component 102, or some other component of the network computing environment 100 via a network 110.

The network 110 may be a local area network (LAN), wide area network (WAN), some other network, or a combination thereof. In addition, the network computing environment 100 may connect to another network 120, such as a corporate or university network, or a collection of networks operated by independent entities, such as the Internet. Customers 122 of the network computing environment 100 may communicate with host computing devices 104 over the combination of the networks 120, 110. In some examples the customers 122 may cause a computing device 102 to launch a virtual machine instance to execute various computing operations for or on behalf of the customer 122. Any number of virtual machine instances may be running on a single host computing device 104 at a given time. In addition, the various virtual machine instances running on a host computing device 104 may be associated with a single customer 122 or with a number of different customers 122.

The management component 102 may be implemented as hardware or as a combination of hardware and software. For example, the management component 102 may be a computing system of one or more computing devices configured to execute one or more software programs to perform the functions described herein. In some examples the management component may include one or more of the host computing devices 104a - 104n.

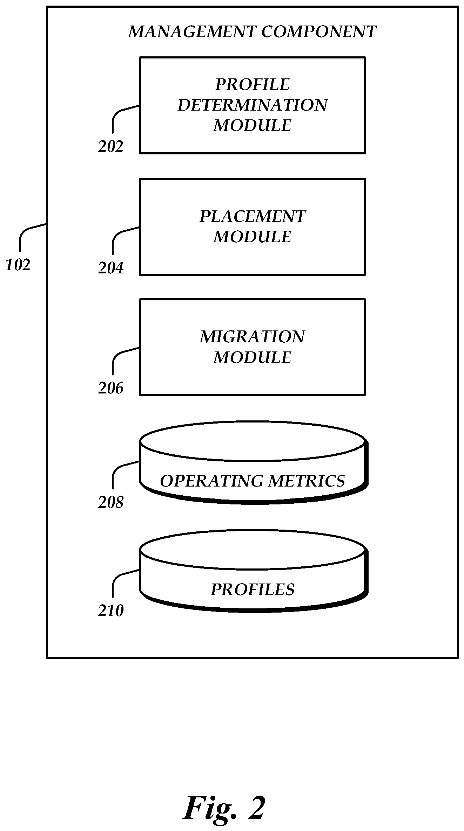

FIG. 2 illustrates a sample management component 102 in greater detail. The management component 102 can include a profile determination module 202, a placement module 204, a migration module 206, an operating metrics data store 208, and a profile data store 210. In some examples the management component 102 may include more or fewer modules and data stores than those illustrated in FIG. 2. For example, there may be no separate migration module 206, when the migration feature is not implemented, or implemented by the placement module 204. In another example there may be additional data stores for generalized customer profiles.

In operation, the profile determination module 202 obtains operating data regarding operating metrics and resource usage by virtual machine instances associated with a particular customer 122, and optionally instances of a particular virtual machine instance configuration at a particular time, etc. The profile determination module 202 analyzes the operating data and develop an operating profile of the computing resources utilized by the virtual machine instance or group of virtual machine instances being profiled. For example, operating data may include historical measurements regarding the amount of memory utilized, the central processing unit (CPU) utilization, the amount of network traffic transmitted or received, the amount of hard disk space utilized, the number of disk operations, the amount of electricity utilized (e.g.: the amount utilized by the host computing device 104 that may be attributable to the virtual machine instance), the amount of network link traffic initiated, and the like. The profile determination module 202 can then determine an average for each of the measurements associated with instances of a particular virtual machine instance configuration or group of virtual machine instance configurations, and store the averages in the operating profile. The operating profile need not be limited to average measurements. For example, the operating profile may include other statistical analyses, such as the median, standard deviation, usage histogram or any other appropriate or useful data. In some examples the operating profile may further be characterized according to temporal characteristics of usage, such as the time of day, day of the year, etc.

The operating profile may also be characterized according to expected measurements and operating metrics. For example, a variance from an expected performance metric, generally referred to as jitter, may be observed and included in the operating profile. Such data may be used to determine whether design goals, service-level agreements and other promises or obligations to the consumer are being met or to determine how often they fail to be met. The placement module 204 may account for jitter when making future placement decisions, endeavoring to ensure that the same operating metric will not fall outside the expected range or otherwise ensuring that consumer obligations are satisfied. In some examples the operating profile may contain other data, such as latency preferences or requirements, instructions set preferences or requirements, and the like. Such data may be provided by consumers or determined through analysis of virtual machine instance operation by the profile determination module 202.

Illustratively, a service provider may provide three classes of virtual machines: small, medium, and large. Each class may be associated with a predetermined amount of each computing resource that will be reserved for use by instances of the virtual machine (e.g.: small VMs may have 2 GB RAM, medium VMs may have 8 GB RAM, large VMs may have 32 GB RAM). Customers may instantiate instances of a virtual machine configured with an operating system and application software, such as a large virtual machine configured with web server software. Measurements may be recorded regarding usage of computing resources by an instance of the large virtual machine configured with web server software. The profile determination module 202 can then calculate expected resource usage amounts for future instances of the virtual machine instance configuration when, for example, used as a web server. The expected resource usage amounts may form the basis of the operating profile determined by the profile determination module 202. The profile determination module 202 may then modify the operating profile as a data set including measurements of actual resource usage is built over time.

The profile data that is used by the profile determination module 202 may be obtained from a variety of sources. As described above, the data may be obtained from an entity associated with the virtual machine. Data may also be obtained directly from a workload analysis component of the host computing device 104 on which the virtual machine instance is executing. In some examples the data can be obtained from an operating metric data store 208. The operating metric data store 208 may be integrated with the management component 102, as illustrated in FIG. 2, or it may be physically located on a separate computing device, such as a dedicated relational database management system (RDBMS) server. The operating profiles that are determined by the profile determination module 202 may be stored in a profile data store 210. Similar to the operating metric data store 208, the profile data store 210 may be integrated with the management component 102 or located on separate computing device, such as a dedicated RDBMS server.

In some network computing environments 100, there may be thousands or more of virtual machine instances to profile, and each operating profile is based on the analysis of the usage of a particular customer and optionally of usage data unique to particular virtual machine instance configurations. In order to efficiently utilize the operating profiles to make placement decisions regarding the instantiation of virtual machine instances on host computing devices 104a - 104n, the operating profiles may be generalized. Accordingly, a number of different virtual machine instance configurations may be associated with the same, or substantially similar, operating profiles even though there may be variances in the actual resource usage associated with each virtual machine instance configuration. For example, the profile determination module 202 may associate a virtual machine instance configuration with predefined expected usage amounts rather than storing a customized operating profile for each virtual machine instance configuration. The predefined operating profile may include utilization ranges for each computing resource that is measured. In addition, the operating profiles may be hierarchical, such that a particular virtual machine instance configuration is associated with a particular operating profile, and also with a more general operating profile that is itself associated with multiple virtual machine instance configurations.

In some examples the operating profiles may be further generalized into categories. For example, a number of virtual machine instance configurations, each associated with a different amount of network usage, may be categorized as "light network applications" or "heavy network applications" depending on whether the usage measurement exceeds or falls short of some threshold. In such a categorization scheme, a virtual machine instance configuration that, when instantiated, primarily performs local computing operations and rarely utilizes a network connection may be categorized in the same "light network applications" category as a virtual machine instance configuration that often utilizes a network connection, but only for very small transmissions which may be trivial in comparison to the amount of network bandwidth available to the host computing devices 104a - 104n on which the virtual machine instance executes. Such generalized operating profiles may also be based on a composite of two or more categories, such as "light network application/heavy CPU application" and "light network application/light CPU application." Returning to the previous example, the two virtual machine instance configurations may be associated with different categories. The virtual machine instance configuration that, when instantiated, primarily performs local computing operations and rarely utilizes a network connection may be categorized as a "light network application/heavy CPU application," while the virtual machine instance configuration which, when instantiated, often initiates small network transmissions may be categorized as a "light network application/light CPU application" if the CPU utilization of the virtual machine instances fall below a threshold.

As described above, the operating profiles, whether specific to a virtual machine instance configuration or generalized to a number of virtual machine instance configurations, are used to identify a host computing device 104a - 104n on which to place virtual machine instances. The placement module 204 may be invoked when a customer 122 initiates a computing session or when a virtual machine is otherwise instantiated. The placement module 204 may determine which operating profile is associated with the virtual machine instance at the current time. For example, the operating profile may be a customized profile including measurements of actual resource usage associated with the virtual machine instance at the current time of day, during the current month of the year, etc. The measurements are specific to a virtual machine instantiated at the request of a particular customer, such that an operating profile for a particular customer may be created and accessed. The customer-specific operating profile can apply to a specific virtual machine instance configuration or it may generally apply to multiple distinct virtual machine instance configurations. Optionally, the operating profile may additionally be a generalized profile based on the overall character of resource usage associated with the virtual machine instance, which may also be based on the current time of day, etc. The virtual machine placement module 204 can then select a host computing device 104 on which to launch the virtual machine instance based on the resource availability of the host computing devices 104a - 104n and the expected resource usage of the virtual machine instance determined from the operating profile.

Resource utilization is dynamic over the lifetime of a single instance of a specific virtual machine instance configuration, and may be dynamic over multiple instances of the specific virtual machine instance configuration. The migration module 206 of the management component 102 may monitor the resource utilization of each executing virtual machine instance and the host computing device 104 on which the virtual machine instance is executing. When the resource utilization changes, the migration module 206, similar to the virtual machine placement module 204 described above, may select an appropriate host computing device 104 on which to place the virtual machine instance. A new instance of the virtual machine may be launched on the selected host computing device 104, and the execution state of the virtual machine instance (memory, inputs, and the like) may be copied to the new virtual machine instance. When the new virtual machine instance is ready to begin executing, the previous virtual machine instance may be terminated without a loss of data and without a substantial loss of performance. The new virtual machine instance may execute more efficiently due to the available resources.

In some examples rather than instantiating a new instance of the virtual machine on a different host computing device and terminating the previous instance, resources may be reallocated. When resource utilization or performance metrics change, additional resources (e.g., memory) may be allocated to the particular virtual machine. For example, a resource may be reallocated from other virtual machines that are not expected to fully utilize the resource.

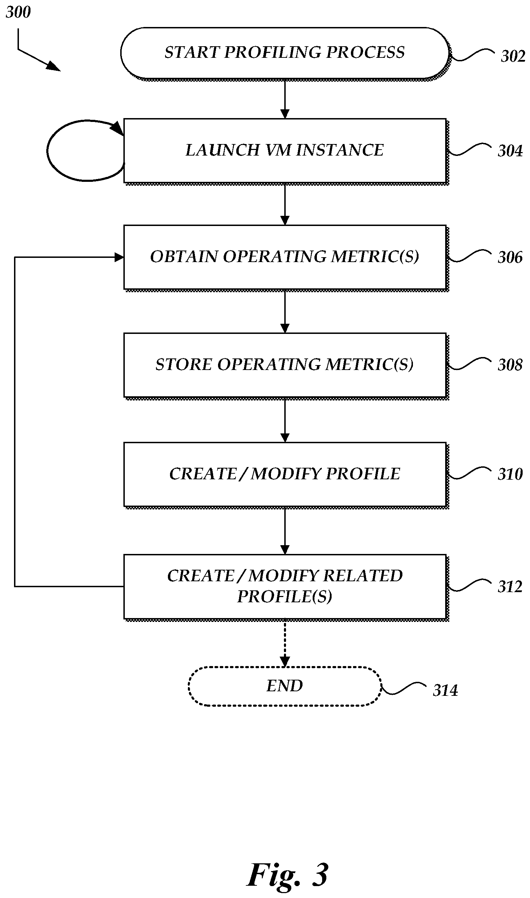

Turning now to FIG. 3, an illustrative process 300 for determining an operating profile for a virtual machine instance configuration will be described. The process 300 may be executed by a management component 102. The management component 102 receives a request from a customer 122 or is otherwise notified to instantiate a virtual machine. After instantiating the virtual machine instance, identifying an instantiated virtual machine instance or causing the virtual machine to be instantiated, the management component 102 may monitor or otherwise receive operating data regarding computing resource utilization associated with the virtual machine instance. Based on the resource usage and operating metric data, the management component 102 can determine or update an operating profile for the virtual machine instance configuration, or update an existing operating profile. Advantageously, the operating profile may be compared with other operating profiles and generalized and the virtual machine instance configuration may be associated with a category of resource usage.

The process 300 begins at block 302. The process 300 may begin automatically, such as in response to the receipt of a request to instantiate a virtual machine. For example, the process 300 may be embodied in a set of executable program instructions and stored on a computer-readable medium drive of the computing system with which the management component 102 is associated. When the process 300 is initiated, the executable program instructions can be loaded into memory, such as RAM, and executed by one or more processors of the computing system. In some examples the computing system may include multiple computing devices, such as servers, and the process 300 may be executed by multiple servers, serially or in parallel.

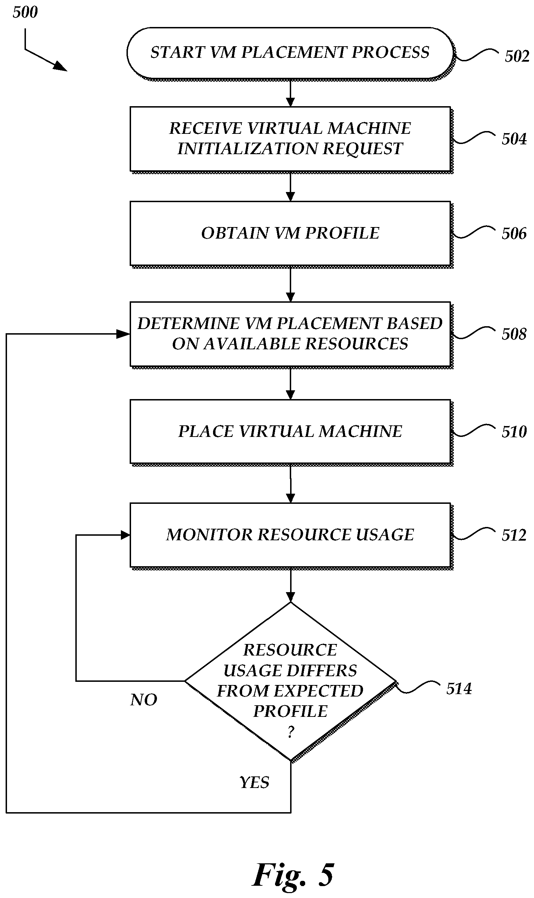

At block 304, the management component 102 or some other component launches a virtual machine instance. As described in detail below with respect to FIG. 5, the management component may select a host computing device 104 on which to launch the virtual machine instance based on the resources expected to be consumed by the virtual machine instance and the resources that the host computing devices 104a - 104n currently have available. The resources expected to be consumed by the virtual machine instance or to be made available to the virtual machine instance may be determined from a preexisting operating profile, from information received from the customer 122 or other entity requesting that the virtual machine instance be launched, etc.

The process 300 may proceed to block 306 for the newly launched virtual machine instance in order to obtain operating metrics and to create or modify an operating profile. While the process 300 proceeds, any number of additional virtual machine instances may be launched and/or placed at block 304 based on the same operating profile, either as it originally existed, or as modified during the execution of the process 300 for previously launched virtual machine instances. In this way, the process 300 may be performed in any number of concurrent instances, generally corresponding to the number of virtual machine instances associated with the operating profile (or, in a hierarchy of profiles, a profile from a higher level in the hierarchy) that may be executing at a particular time.

At block 306, the resources utilized by the virtual machine instance are monitored, and operating metrics and optionally resource usage measurements are obtained. At block 308, the operating metrics may be recorded. The monitoring may be performed by the management component 102, or by some other component, such as a workload analysis component 421 of the host computing device 104 on which the virtual machine instance is executing. The operating metrics may be stored at the operating metrics data store 208. In examples using a workload analysis component 421, the workload analysis component 421 may store operating metrics temporarily or long-term. The workload analysis component may transmit data regarding the operating metrics to the management component 102 for storage in substantially real time, at scheduled intervals, upon virtual machine termination, at some other time, or not at all.

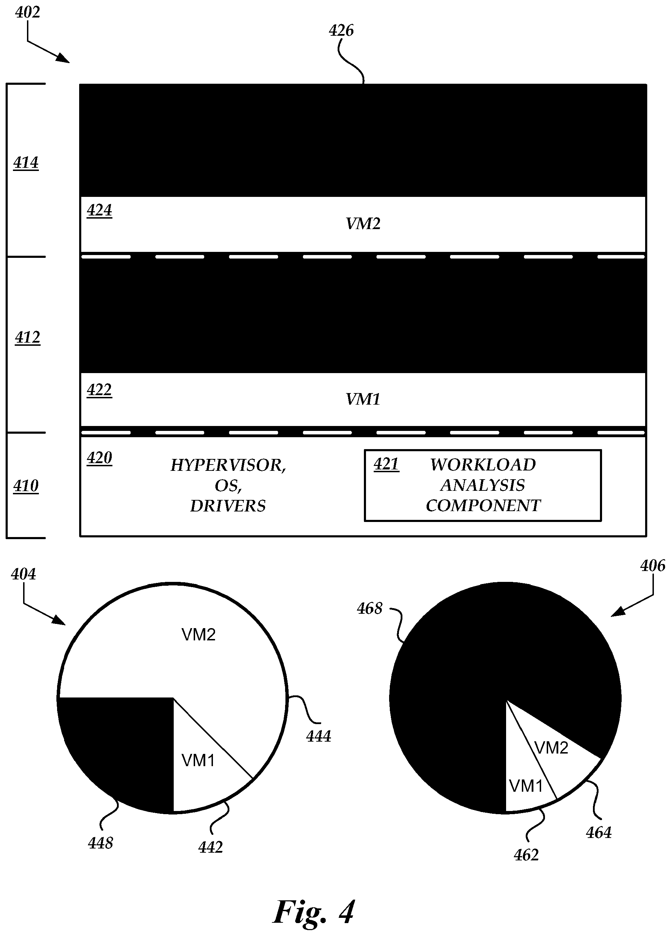

FIG. 4 illustrates measurement of the utilization of several resources provided to multiple virtual machine instances by a host computing device 104. As illustrated in FIG. 4, a host computing device 104 may provide computing resources, such as memory 402, a CPU 404, and a network bandwidth 406. In some examples additional or fewer computing resources may be provided to virtual machine instances. For example, a virtual machine instance may not be permitted to communicate with other devices, and therefore utilization of the network interface 406 need not be measured. In another example, a host computing device 104 may provide and track utilization of hard disk space, hard disk operations, electrical power, and the like.

In some examples a provider of computing resources, such as an operator of a network computing environment 100, may provide customers with a set amount of computing resources on which to execute a virtual machine instance. For example, a customer 122 may reserve for one of its virtual machine instance configurations a predetermined amount of memory, such as random access memory (RAM), a predetermined amount of computing capacity, such as CPU cores, and a predetermined amount of network bandwidth, as provided by a network interface. Memory 402 of a host computing device 104 may be segregated into portions 410, 412, 414 which are reserved for single virtual machine instances (e.g.: portions 412, 414) or for the operation of the host computing device 104 and other internal procedures (e.g.: portion 410). The portion reserved for operation of the host computing device 104 may include a hypervisor for assisting in the launch, execution, and termination of virtual machine instances, an operating system, drivers, and the like. In addition, the host computing device 104 may include a workload analysis component 421 which monitors resource utilization and optionally communicates with the management component 102. The workload analysis component 421 may also reside in the memory space 410, and may be integrated into the hypervisor 420 or may be an independent component which shares the memory space 410. In some examples the workload analysis component 421 may reside in a memory space 412, 414 reserved for customer virtual machine instances. In such cases, the workload analysis component 421 may be integrated into the virtual machine instance configurations or included in the virtual machine instance upon instantiation. In further examples the workload analysis component 421 may reside in a separate memory space reserved for it, or may be implemented as a component, such an independent hardware device, which does not share the memory 402 of the host computing device 104.

In many cases, a virtual machine instance may not utilize the entire portion of a resource that is reserved for it. For example, VM1 422, illustrated in FIG. 4, may be a virtual machine instance of a customer 122, and may be launched into memory space 412, the entirety of which is reserved for use by VM1 422. In operation, VM1 422 may not utilize the entire memory space 412, and in some cases may utilize on a small fraction of the reserved memory space 412. At times, however, the utilization of the memory space 412 may change, and VM1 422 may utilize substantially all of the memory space 412. The workload analysis component 421 may monitor these changes and record measurements and other data, such as the time of day, the specific virtual machine instance configuration, or which other virtual machine instances, if any, were executing on the host computing device 104. The workload analysis component 421 may transmit the data to the management component 102 or to a data store. In some examples the workload analysis component 421 may temporarily store the data and later transfer it to the management component 102, such as on a schedule, or in response to a triggering event, such as the termination of VM1 422. Similar to measuring and recording data about the utilization of memory 402, the workload analysis component 421 or some other component may monitor usage of the CPU 404, network interface 406, or any other computing resource utilized by VM1 422.

Data may be obtained and recorded regarding any variances from expected or preferred operating metrics. For example, resource usage measurements and other operating metrics may be recorded and compared to the operating profile in order to determine whether there is a variance from an expected or preferred metric. In some cases, the operating metrics may be recorded on a customer-by-customer basis. Data regarding a variance may be recorded so that future placement or migration decisions may be made based on the variance. In addition, data regarding off-host resources, such as latency, link traffic, and the like may be recorded. The workload analysis component 421 may record such data, or some component external to the host (e.g., the management component 102 or a switch) may observe the operating metrics. In some examples resource usage that does not necessarily reduce the availability of the resource may be determined. For example, if a virtual machine instance or application software running thereon performs certain cryptographic operations or is observed calling certain cryptographic functions or instructions, such data may be recorded. The placement module 204 or migration module 206 may consider such data when launching or migrating an instance of the virtual machine. A host computing device may be selected which provides more efficient or more powerful cryptographic instructions, such a device supporting Intel^{®} Advanced Encryption Standard (AES) New Instructions (AES-NI) or similar device.

At block 310, the profile determination module 202 or some other module of the management component 102 may modify an operating profile associated with the virtual machine instance, or create a new operating profile. As described above, operating profiles include information about expected resource usage, and may also include information about typical resource usage, variances from expected or desired operating metrics, and the like. For example, the operating profile may consist of average measurements for each of a number of different instances of a single virtual machine instance configuration. Each resource may be associated with multiple measurements which correspond to operating based on a particular customer, a time of day, a day of the year, or other environmental factors.

In some examples each resource of the operating profile may be associated with a score or some other indication of utilization rather than a statistical measurement. For example, each resource may be assigned a score of 1-10, where higher numbers are associated with the heaviest and/or most frequent users of a resource. In some examples the operating profiles may be generalized further. A predefined set of generalized operating profiles may cover ranges of measurements or scores for each resource. For example, the virtual machine instance configuration from which VM1 422 was instantiated may be assigned to one generalized operating profile if, during nighttime hours, VM1 422 utilizes no more than 25% of its memory space 412 but utilizes almost 100% of its CPU availability. The generalized operating profiles may include multiple ranges of measurements for each resource, depending on the time of day or other factors. Returning the previous example, the virtual machine instance configuration from which VM1 422 is instantiated may be instead assigned to a different predefined operating profile if the virtual machine instances typically utilize resources in that manner described above during nighttime hours, but during daytime hours it utilizes 50% of both its memory segment 412 and CPU availability. Multiple generalized operating profiles may be assigned to particular virtual machine instance configurations based on usage by particular customers. For example, each customer that users the virtual machine instance configuration may be associated with a different operating profile.

In some examples each customer 122 may be associated with a generalized operating profile even though it has a number of different virtual machine instance configurations, and even though each virtual machine instance configuration may utilize resources differently. A customer 122 may have one virtual machine instance configuration, such as the one from which VM1 422 in FIG. 4 is instantiated, which may be independently profiled as a light CPU application, while another virtual machine instance configuration, such as the one from which VM2 424 is instantiated, may be independently profiled as a heavy CPU application. The customer 122 may be profiled as a moderate CPU user, because its average CPU use is moderate. Optionally, the customer 122 may be profiled as a heavy CPU user, because it has at least one virtual machine instance configuration which is a heavy CPU application. In other examples customers may have several associated operating profiles for each virtual machine image configuration. Different customers or users of substantially the same virtual machine image, such as VM1 422, may use different amounts of resources, even though the virtual machine image is a common configuration. A given customer starting a particular VM may be more likely to use that VM in the same way as previously recorded, and consume approximately the same resources.

Operating profiles for each virtual machine instance configuration may be stored in the profiles data store 210. The actual measurements for each profile may be stored in the operating profile, or an ID or other indication of which category or generalized operating profile the virtual machine instance configuration is associated with may be stored. In embodiments which determine and utilize customer profiles instead of or in addition to virtual machine profiles, customer profile data may be stored in the same data store 210 or in a different data store.

At block 312, related or generalized operating profiles may be created or modified. For example, higher-level profiles may be created or modified if hierarchical profiles are used. Historical operating metrics may be accessed from the operating metrics data store 208 for each virtual machine instance configuration associated with the high-level operating profile, in some cases regardless of which lower-level profiles the virtual machine instance configurations are associated with. Statistical analyses may be performed and operating metric variances may be determined as described above. Advantageously, the modified high-level or generalized operating profile may be accessed and used by the placement module 204 or migration module 206 when instantiating or migrating virtual machine instances that are different from the virtual machine instance associated with the current execution of the process 300. Accordingly, the recorded operating metrics associated with one virtual machine instance may be used to fine tune the placement and execution of other virtual machine instances, even those which are not instantiated from the same virtual machine instance configuration.

Turning now to FIG. 5, an illustrative process 500 for determining placement of virtual machine instances based on operating profiles will be described. The process 500 may be executed by a management component 102. The management component 102 may receive a request from a customer 122 or may otherwise be notified to launch an instance of a virtual machine from a specific virtual machine instance configuration or image. The management component 102 can identify host computing devices 104a - 104n which are able to host the virtual machine instance and determine the current status of the host computing devices 104a - 104n with respect to available computing resources. Advantageously, the management component 102 may also obtain an operating profile for the virtual machine instance configuration to be instantiated, and determine which of the available host computing devices 104a - 104n may most efficiently host the virtual machine from the standpoint of available resources. A host computing device 104 may be selected which is already executing virtual machines and which has committed most or all of its resources to host virtual machines already executing. Based on operating profiles of the currently executing virtual machine instances and of the virtual machine instance to be launched, the management component 102 may launch the virtual machine instance on the host computing device 104 if the management component 102 determines that the host computing device 104 can provide the computing resources that the virtual machine instances will likely consume. In some cases, this may include oversubscribing resources (e.g., allocating the same resources to multiple virtual machine instances). Moreover, the management component 102 can monitor the execution of the virtual machine instances on the host computing device 104, and transfer execution of one or more virtual machine instances to another host computing device 104 if there are not enough computing resources to satisfy each virtual machine instance.

The process 500 begins at block 502. The process 500 may be initiated automatically, such as in response to the receipt of a request to launch a virtual machine instance. For example, the process 500 may be embodied in a set of executable program instructions and stored on a non-transitory computer-readable medium drive of the computing system with which the management component 102 is associated. When the process 500 is initiated, the executable program instructions can be loaded into memory, such as RAM, and executed by one or more processors of the computing system. In some examples the computing system may include multiple computing devices, such as servers, and the process 500 may be executed by multiple servers, serially or in parallel.

At block 504, the management component 102 may receive a request or some other notification to initialize a virtual machine instance. The notification may be received from a customer 122, a host computing device 104, or some other component or entity. In some examples a virtual machine instance may request initialization of another virtual machine instance, another instance of the same virtual machine instance configuration or image, etc.

At block 506, the VM placement module 204 or some other module of the management component 102 may obtain an operating profile for the virtual machine instance to be launched. The operating profile may be loaded from the profile data store 210 or obtained from some other source. The VM placement module 204 may inspect the operating profile to determine which resources the virtual machine instance is likely to utilize and in which quantity. As described above, the operating profile of the virtual machine instance configuration may be different depending on environmental factors, such as the time of day. In such cases, the VM placement module 204 of the management component 102 can consider such environmental factors when inspecting the operating profile.

At block 508, the VM placement module 204 or some other module of the management component 102 may select a host computing device 104 on which to launch the virtual machine instance based on available resources and the operating profile. For example, a network computing environment 100 may include a number of host computing devices 104a - 104n. The host computing devices 104a - 104n need not be identical; some may have more or less RAM than others, more or less powerful processors or a different number of processors, etc. The VM placement module 204 may select a host computing device 104 on which to launch the virtual machine instance based on the expected resource utilization as identified by the operating profile and by the resources that each computing device makes available.

In some examples a host computing device 104 may be configured to host a set number of instances of a particular virtual machine or class of virtual machines. As shown in FIG. 4, the host computing device 104 may have an amount of memory 402 such that it can reserve a predetermined memory space 410 for the hypervisor 420, and two additional memory spaces 412, 414 of a predetermined size for virtual machines. Two virtual machine instances 422, 424 may be launched on the host computing device 104, with each virtual machine instance 422, 424 assigned a separate memory space 412, 414. A customer 122 may reserve a particular amount of a resource to be available to its virtual machine instances 422, 424, such as by selecting a particular class of virtual machine (e.g.: small, medium or large as described above) to configure. The memory spaces 412, 414 may correspond to the maximum allowable amount of resources available to the virtual machine instances 422, 424, as reserved by the customer 122. However, in practice the virtual machine instances 422, 424 may not utilize the entire amount of a computing resource that is reserved for them. For example, as seen in FIG. 4, the virtual machine instances 422, 424 are only utilizing a fraction of the memory spaces 412, 414 that are reserved for them. It may be advantageous to utilize such excess memory space and other excess computing resources so as to reduce the number of host computing devices 104a - 104n required to service all currently executing virtual machine instances or to more efficiently utilize the resources of those host computing devices 104a - 104n which are operating.

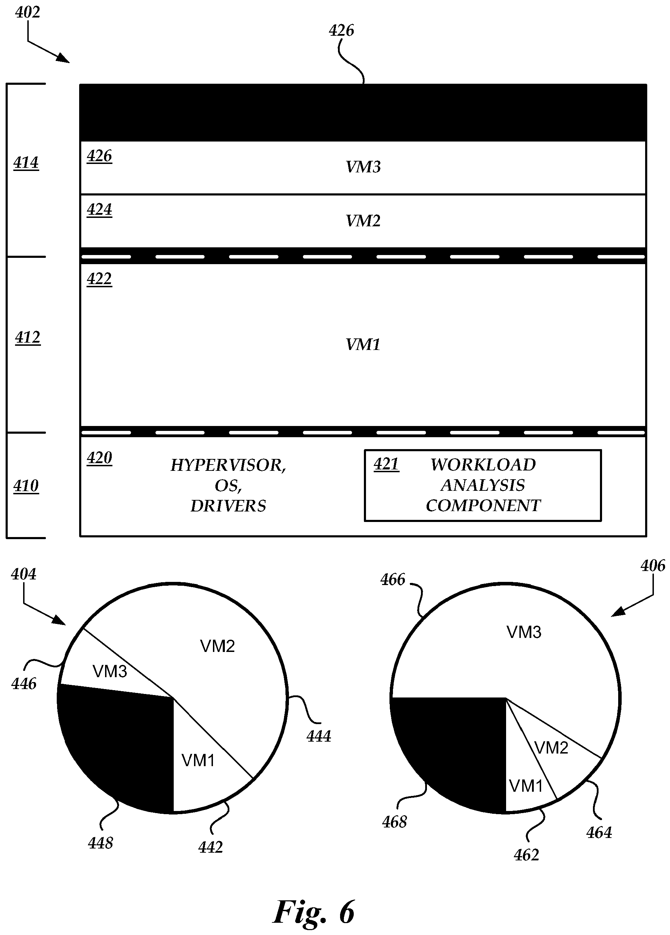

FIG. 6 illustrates a host computing device 104 with oversubscribed computing resources. A third virtual machine instance 426 has been launched on the host computing device 104 even though the host computing device 104 only contains two memory spaces 412, 414 available for virtual machine instances. Based on the operating profile associated with each of the virtual machine instances 422, 424, 426, the VM placement module 204 may determine that VM2 422 utilizes only a fraction of its available memory space 414, and VM3 426 also uses only a fraction of its available memory space when it is launched. Therefore, the VM placement module 204 may launch VM3 426 on the same computing device as VM2 424 and assign them to the same memory space 414.

As seen in FIG. 6, VM1 422 utilizes substantially all of its memory space 412, and therefore the VM placement module 204 may not assign another virtual machine instance to the same memory space 412 due to the operating profile of VM1 422. However, VM1 422 utilizes only a small amount of CPU capacity 442, and therefore a host computing device 104 on which VM1 422 is executing may be a candidate for oversubscription if the operating profiles of the virtual machine instances are complementary. In the example illustrated in FIG. 6, VM2 424 utilizes a large amount of CPU capacity 444. However, if the operating profile of VM3 426 indicates that it is a light user of CPU capacity, then the three virtual machine instances VM1 422, VM2 424, and VM3 426 may be candidates for oversubscription due to the complementary, rather than overlapping, operating profiles of the virtual machine instance configurations from which they are instantiated. Additional resources may be factored into an oversubscription determination in order to ensure that each virtual machine instance executing on a host computing device 104 has readily available to it the amount of each computing resource that it typically requires. For example, network bandwidth utilization 406, as illustrated in FIG. 6, also supports the oversubscription determination example described above because, even though the operating profile for VM3 426 may indicate that it is a heavy network bandwidth application, VM1 422 and VM2 424 utilize only a small amount of network bandwidth.

At block 510, the VM placement module 204 or some other module of the management component 102 may place the virtual machine instance on the host computing device 104 that is identified in block 508. As described above, the virtual machine instance may be placed on a host computing device 104 with other virtual machine instances which have reserved amounts of computing resources totaling or exceeding the amount provided by the host computing device 104. In some cases, the oversubscription may be substantial.

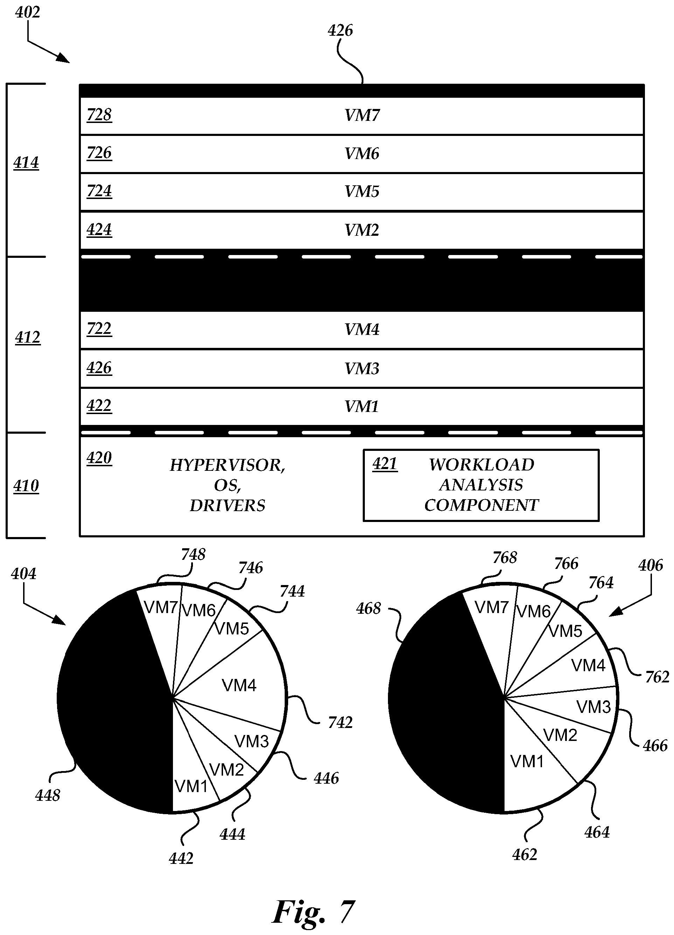

FIG. 7 illustrates a substantially oversubscribed host computing device 104. As described above, customers 122 may reserve a specified amount of computing resources for use by virtual machine instances of the customer. However, in some cases a customer 122 may have substantially overestimated the amount of computing resources that its virtual machine instances may actually use. In extreme cases, customer 122 may reserve a large quantity of computing resources, launch virtual machine instances associated with those resources, and then let the virtual machine instances sit idle or otherwise substantially underuse the reserved resources. Over the course of time, operating profiles may be developed for the virtual machine instances or for the customer 122 which reflect the substantial underuse of reserved resources. The management component 102 may then launch a large number of such low-utilization virtual machine instances on a single host computing device 104. The host computing device 104 of FIG. 7 includes seven different virtual machine instances 422, 424, 426. 722, 724, 726, 728 sharing computing resources which may typically be reserved for only two virtual machine instances, as described above with respect to FIGS. 4 and 6. However, there is still excess capacity of each of the three computing resources 402, 404, 406. In some cases, hundreds or more of virtual machine instances may be placed on a host computing device 104, such as when the host computing device 104 has a large amount of available computing resources and the virtual machine instances are substantially idle.

At block 512, the resource utilization of each virtual machine instance may be monitored. Over the lifetime of the specific virtual machine instances, the workload analysis component 421 may monitor operating and notify the management component 102 if one of the virtual machine instances begins to utilize resources at a level that is not serviceable by an oversubscribed host computing device 104, or if the resource usage or an operating metric otherwise differs from an expected or desired amount. In some examples the management component 102 may perform the monitoring.

At block 514, the management component 102 can determine whether resource usage or an operating metric differs from an expected or desired amount. For example, the management component can determine whether a change in resource usage exceeds a threshold or may otherwise cause undesirable performance degradation. A virtual machine instance which begins to utilize more of a computing resource than expected, based on its operating profile and the placement determined by the management component 102, may be transferred to a host computing device 104 that is oversubscribed to a lesser extent, or to a host computing device 104 that is not oversubscribed at all. In such cases, execution of the process 500 can return to block 508, where the VM migration module 206 or some other management component 102 determines to which computing device to transfer the virtual machine 842.

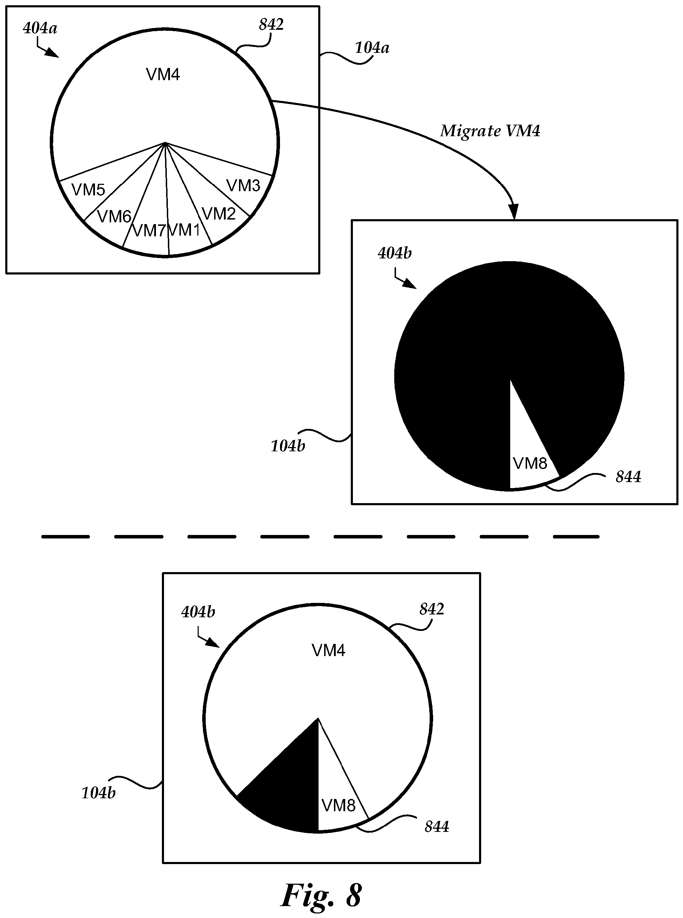

FIG. 8 illustrates a host computing device 104a which has oversubscribed CPU capacity 404a. A virtual machine instance VM4 842 may begin to consume a large amount of available CPU capacity 404a, in contradiction to its operating profile. However, the customer 122 associated with the virtual machine instance VM4 842 may have reserved a large amount of CPU capacity for the virtual machine instance configuration from which VM4 842 is instantiated, and therefore it may be desirable to provide the virtual machine instance VM4 842 with more CPU capacity than an oversubscribed host computing device 104a can provide. As shown in FIG. 8, the host computing device 104b may be a candidate for such a transfer. The virtual machine instance VM8 844 is currently consuming only a small fraction of the CPU capacity 404b available on the host computing device 104b, and the management component 102 may determine that the operating profile associated with VM8 844 indicates that it is not likely to consume more. The VM migration module 206 can initiate transfer of VM4 842 from host computing device 104a to host computing device 104b.

Transfer of a virtual machine instance may include first launching an instance of the same virtual machine instance configuration or image on the target host computing device 104b while the virtual machine instance on the source host computing device 104a continues to execute. The execution state of the virtual machine instance on the source host computing device 104b, including the data in the memory space or hard disk associated with the virtual machine instance, network connections established by the virtual machine instance, and the like, can then be duplicated at the target host computing device 104b. The virtual machine instance on the source host computing device 104a can be terminated, and the virtual machine instance on the target host computing device 104b can continue execution from that point.

Depending on the example, certain acts, events, or functions of any of the processes or algorithms described herein can be performed in a different sequence, can be added, merged, or left out altogether (e.g., not all described operations or events are necessary for the practice of the algorithm). Moreover, in certain examples operations or events can be performed concurrently, e.g., through multi-threaded processing, interrupt processing, or multiple processors or processor cores or on other parallel architectures, rather than sequentially.

The various illustrative logical blocks, modules, routines, and algorithm steps described in connection with the examples disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

The steps of a method, process, routine, or algorithm described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor such that the processor can read information from, and write information to, the storage medium. In the alternative, the storage medium can be integral to the processor. The processor and the storage medium can reside in an ASIC. The ASIC can reside in a user terminal. In the alternative, the processor and the storage medium can reside as discrete components in a user terminal.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without author input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Conjunctive language such as the phrase "at least one of X, Y and Z," unless specifically stated otherwise, is to be understood with the context as used in general to convey that an item, term, etc. may be either X, Y, or Z, or a combination thereof. Thus, such conjunctive language is not generally intended to imply that certain embodiments require at least one of X, at least one of Y and at least one of Z to each be present.

## Claims

1. A system for profiling computing resource usage, the system comprising:
one or more processors;
a computer-readable memory including executable instructions that, when executed by the one or more processors, configure the system to:
determine an operating constraint (306) for an instance of a first virtual machine from operating metrics determined from running at least an instance of a second virtual machine, wherein the operating metrics vary over at least a portion of a lifecycle of the instance of the second virtual machine, wherein the second virtual machine is a virtual machine instantiated at the request of a same customer as the first virtual machine, wherein the operating constraint relates to an expected usage amount of a computing resource provided by a host computing device on which the first virtual machine is to be instantiated, wherein the operating constraint varies over at least a portion of a lifecycle of the instance of the first virtual machine;
receive a request (504) to instantiate the first virtual machine; and
in response to the request:
identify a host computing device (508), of a plurality of host computing devices, the identified host computing device having one or more operating characteristics related to the operation of virtual machine instances, the identification based partly on whether the one or more operating characteristics satisfy the operating constraint, wherein at least one of the one or more operating characteristics comprises memory capacity, central processing unit - CPU - capacity,
network bandwidth, network latency, position within a network topology, instruction set, or variance of a performance metric; and
responsive to identifying that the host computing device has one or more operating characteristics that satisfy the operating constraint, cause a new instance of the first virtual machine to be instantiated on the host computing device (510).

2. The system of Claim 1, wherein at least one of the operating metrics relates to central processing unit - CPU - utilization, memory utilization, network utilization, hard disk utilization, or electrical power utilization.

3. The system of Claim 1 or Claim 2, wherein the expected usage amount is further based on data received from a customer on whose behalf the first virtual machine is instantiated.

4. The system of any one of the preceding claims, wherein the memory, when executed, is further configured to:
receive an additional operating metric regarding operation of the new instance on the host computing device, the additional operating metric corresponding to the one or more operating characteristics; and
in response to determining, based on the additional operating metric, that the one or more operating characteristics no longer satisfy the operating constraint, transfer the new instance to a second computing device, the second computing device having one or more additional operating characteristics that satisfy the operating constraint.

5. A computer-implemented method for profiling computing resource usage, the computer-implemented method comprising:
receiving, by one or more computing devices, a request for initialization of a virtual machine, wherein the virtual machine has an operating constraint, wherein the operating constraint is determined from a plurality of operating metrics determined from running at least an instance of a second virtual machine, wherein the second virtual machine is a virtual machine instantiated at the request of a same customer as the first virtual machine, the operating metrics varying over at least a portion of a lifecycle of the instance of the second virtual machine, wherein the operating constraint relates to an expected usage amount of a computing resource provided by a host computing device on which the first virtual machine is to be instantiated, and wherein the operating constraint varies over at least a portion of the lifecycle of the instance of the first virtual machine; and
in response to the request:
identifying a host computing device of a plurality of host computing devices, the identified host computing device having one or more operating characteristics related to the operation of virtual machine instances, the identification based partly on whether the one or more operating characteristics satisfy the operating constraint, wherein at least one of the one or more operating characteristics comprises memory capacity, central processing unit - CPU - capacity, network bandwidth, network latency, position
within a network topology, instruction set, or variance of a performance metric; and
responsive to identifying that the host computing device has one or more operating characteristics that satisfy the operating constraint, causing a new instance of the first virtual machine to be initialized on the host computing device.

6. The computer-implemented method of Claim 5, wherein the operating constraint comprises a first expected resource usage amount of a first computing resource, wherein the first expected resource usage amount is based on a plurality of historical operating metrics regarding usage of the first resource.

7. The computer-implemented method of Claim 6, wherein each of the plurality of historical operating metrics regarding usage of the first resource relates to a time that a measurement of usage was recorded, and wherein the operating constraint is further based on the time that each of the plurality of historical operating metrics was recorded.

8. The computer-implemented method of any one of Claims 5-7, further comprising determining the operating constraint based on a service level agreement with a customer on whose behalf the first virtual machine is instantiated.

9. The computer-implemented method of Claim 8, further comprising:
receiving a current operating metric regarding operation of the new instance on the computing device, the current operating metric corresponding to the one or more operating characteristics; and
in response to determining, based on the current operating metric, that none of the one or more operating characteristics of the computing device correspond to the desired operating characteristic, transferring the new instance to a second computing device having an operating characteristic corresponding to the desired operating characteristic.

10. The computer-implemented method of any one of Claims 5-9, wherein the operating constraint comprises a first predefined operating constraint of a plurality of predefined operating constraints.

11. The computer-implemented method of Claim 10, wherein the predefined operating constraints relate to levels in an operating hierarchy, and wherein the first predefined operating constraint relates to a higher level, in relation to the new instance of the first virtual machine, of the operating hierarchy.

12. The computer-implemented method of any one of Claims 5-11, wherein the operating constraint comprises a customer-specific operating constraint, and wherein the plurality of historical operating metrics relate to initialization or use of the new instance of the first virtual machine by the customer.

## Patentansprüche

1. System zum Profilieren einer Rechenressourcennutzung, wobei das System umfasst: einen oder mehrere Prozessoren;
einen computerlesbaren Speicher, welcher ausführbare Anweisungen umfasst, die, wenn sie von dem einen oder den mehreren Prozessoren ausgeführt werden, das System konfigurieren zum:
Bestimmen einer Betriebsbeschränkung (306) für eine Instanz einer ersten virtuellen Maschine aus Betriebsmetriken, die aus der Ausführung mindestens einer Instanz einer zweiten virtuellen Maschine bestimmt werden, wobei die Betriebsmetriken mindestens über einen Abschnitt eines Lebenszyklus der Instanz der zweiten virtuellen Maschine variieren, wobei die zweite virtuelle Maschine eine virtuelle Maschine ist, die auf die Anforderung von einem gleichen Kunden wie die erste virtuelle Maschine instanziiert ist, wobei sich die Betriebsbeschränkung auf eine erwartete Nutzungsmenge einer Rechenressource bezieht, die von einer Host-Rechenvorrichtung bereitgestellt wird, auf der die erste virtuelle Maschine zu instanziieren ist, wobei die Betriebsbeschränkung mindestens über einen Abschnitt eines Lebenszyklus der Instanz der ersten virtuellen Maschine variiert;
Empfangen einer Anforderung (504) zum Instanziieren der ersten virtuellen Maschine; und
als Reaktion auf die Anforderung:
Identifizieren einer Host-Rechenvorrichtung (508) einer Vielzahl von Host-Rechenvorrichtungen, wobei die identifizierte Host-Rechenvorrichtung eine oder mehrere Betriebseigenschaften aufweist, die sich auf den Betrieb von Instanzen virtueller Maschinen beziehen, wobei die Identifikation teilweise darauf basiert, ob die eine oder die mehreren Betriebseigenschaften die Betriebsbeschränkung erfüllen, wobei mindestens eine der einen oder mehreren Betriebseigenschaften Speicherkapazität, Kapazität einer zentralen Verarbeitungseinheit, CPU,
Netzwerkbandbreite, Netzwerklatenzzeit, Position innerhalb einer Netzwerktopologie, Anweisungssatz oder Varianz einer Leistungsmetrik umfasst; und
als Reaktion auf das Identifizieren, dass die Host-Rechenvorrichtung eine oder mehrere Betriebseigenschaften aufweist, die die Betriebsbeschränkung erfüllen,
Bewirken, dass eine neue Instanz der ersten virtuellen Maschine auf der Host-Rechenvorrichtung (510) instanziiert wird.

2. System nach Anspruch 1, wobei sich mindestens eine der Betriebsmetriken auf Nutzung einer zentralen Verarbeitungseinheit, CPU,
Speichernutzung, Netzwerknutzung, Festplattennutzung
oder Nutzung elektrischer Energie bezieht.

3. System nach Anspruch 1 oder Anspruch 2, wobei die erwartete Nutzungsmenge ferner auf Daten basiert, die von einem Kunden empfangen werden, für den die erste virtuelle Maschine instanziiert ist.

4. System nach einem der vorstehenden Ansprüche, wobei der Speicher, wenn er ausgeführt wird, ferner konfiguriert ist zum:
Empfangen einer zusätzlichen Betriebsmetrik bezüglich des Betriebs der neuen Instanz auf der Host-Rechenvorrichtung, wobei die zusätzliche Betriebsmetrik der einen oder den mehreren Betriebseigenschaften entspricht; und
als Reaktion auf das Bestimmen, basierend auf der zusätzlichen Betriebsmetrik, dass die eine oder die mehreren Betriebseigenschaften die Betriebsbeschränkung nicht mehr erfüllen, Übertragen der neuen Instanz auf eine zweite Rechenvorrichtung, wobei die zweite Rechenvorrichtung eine oder mehrere zusätzliche Betriebseigenschaften aufweist, welche die Betriebsbeschränkung erfüllen.

5. Computerimplementiertes Verfahren zum Profilieren einer Rechenressourcennutzung, wobei das computerimplementierte Verfahren umfasst:
Empfangen einer Anforderung zum Initialisieren einer virtuellen Maschine durch eine oder mehrere Rechenvorrichtungen, wobei die virtuelle Maschine eine Betriebsbeschränkung aufweist, wobei die Betriebsbeschränkung aus einer Vielzahl von Betriebsmetriken bestimmt wird, die aus dem Ausführen mindestens einer Instanz einer zweiten virtuellen Maschine bestimmt werden, wobei die zweite virtuelle Maschine eine virtuelle Maschine ist, die auf die Anforderung eines gleichen Kunden wie die erste virtuelle Maschine instanziiert ist, wobei die Betriebsmetriken mindestens über einen Abschnitt eines Lebenszyklus der Instanz der zweiten virtuellen Maschine variieren, wobei sich die Betriebsbeschränkung auf eine erwartete Nutzungsmenge einer Rechenressource bezieht, die von einer Host-Rechenvorrichtung bereitgestellt wird, auf der die erste virtuelle Maschine zu instanziieren ist, und wobei die Betriebsbeschränkung mindestens über einen Abschnitt des Lebenszyklus der Instanz der ersten virtuellen Maschine variiert; und
als Reaktion auf die Anforderung:
Identifizieren einer Host-Rechenvorrichtung einer Vielzahl von Host-Rechenvorrichtungen, wobei die identifizierte Host-Rechenvorrichtung eine oder mehrere Betriebseigenschaften aufweist, die sich auf den Betrieb von Instanzen virtueller Maschinen beziehen, wobei die Identifikation teilweise darauf basiert, ob die eine oder die mehreren Betriebseigenschaften die Betriebsbeschränkung erfüllen, wobei mindestens eine der einen oder mehreren Betriebseigenschaften Speicherkapazität, Kapazität einer zentralen Verarbeitungseinheit, CPU,
Netzwerkbandbreite, Netzwerklatenzzeit, Position
innerhalb einer Netzwerktopologie, Anweisungssatz oder Varianz einer Leistungsmetrik umfasst; und
als Reaktion auf das Identifizieren, dass die Host-Rechenvorrichtung eine oder mehrere Betriebseigenschaften aufweist, welche die Betriebsbeschränkung erfüllen, Bewirken, dass eine neue Instanz der ersten virtuellen Maschine auf der Host-Rechenvorrichtung initialisiert wird.

6. Computerimplementiertes Verfahren nach Anspruch 5, wobei die Betriebsbeschränkung eine erste erwartete Ressourcennutzungsmenge einer ersten Rechenressource umfasst, wobei die erste erwartete Ressourcennutzungsmenge auf einer Vielzahl von historischen Betriebsmetriken bezüglich der Nutzung der ersten Ressource basiert.

7. Computerimplementiertes Verfahren nach Anspruch 6, wobei sich jede der Vielzahl von historischen Betriebsmetriken bezüglich der Verwendung der ersten Ressource auf einen Zeitpunkt bezieht, zu dem eine Messung der Nutzung aufgezeichnet wurde, und wobei die Betriebsbeschränkung ferner auf dem Zeitpunkt basiert, zu dem jede der Vielzahl von historischen Betriebsmetriken aufgezeichnet wurde.

8. Computerimplementiertes Verfahren nach einem der Ansprüche 5 bis 7, ferner umfassend das Bestimmen der Betriebsbeschränkung auf Grundlage einer Dienstgütevereinbarung mit einem Kunden, für den die erste virtuelle Maschine instanziiert ist.

9. Computerimplementiertes Verfahren nach Anspruch 8, ferner umfassend:
Empfangen einer aktuellen Betriebsmetrik bezüglich des Betriebs der neuen Instanz auf der Rechenvorrichtung, wobei die aktuelle Betriebsmetrik der einen oder den mehreren Betriebseigenschaften entspricht; und
als Reaktion auf das Bestimmen, basierend auf der aktuellen Betriebsmetrik, dass keine der einen oder der mehreren Betriebseigenschaften der Rechenvorrichtung der gewünschten Betriebseigenschaft entspricht, Übertragen der neuen Instanz auf eine zweite Rechenvorrichtung, welche eine Betriebseigenschaft aufweist, die der gewünschten Betriebseigenschaft entspricht.

10. Computerimplementiertes Verfahren nach einem der Ansprüche 5 bis 9, wobei die Betriebsbeschränkung eine erste vordefinierte Betriebsbeschränkung einer Vielzahl von vordefinierten Betriebsbeschränkungen umfasst.

11. Computerimplementiertes Verfahren nach Anspruch 10, wobei sich die vordefinierten Betriebsbeschränkungen auf Ebenen in einer Betriebshierarchie beziehen und wobei sich die erste vordefinierte Betriebsbeschränkung in Bezug auf die neue Instanz der ersten virtuellen Maschine auf eine höhere Ebene der Betriebshierarchie bezieht.

12. Computerimplementiertes Verfahren nach einem der Ansprüche 5 bis 11, wobei die Betriebsbeschränkung eine kundenspezifische Betriebsbeschränkung umfasst und wobei sich die Vielzahl von historischen Betriebsmetriken auf eine Initialisierung oder Nutzung der neuen Instanz der ersten virtuellen Maschine durch den Kunden beziehen.

## Revendications

1. Système de profilage d'utilisation de ressources informatiques, le système comprenant : un ou plusieurs processeurs ;
une mémoire lisible par ordinateur incluant des instructions exécutables qui, lorsqu'elles sont exécutées par le ou les processeurs, configurent le système pour :
déterminer une contrainte de fonctionnement (306) pour une instance d'une première machine virtuelle à partir de métriques de fonctionnement déterminées par l'exécution d'au moins une instance d'une deuxième machine virtuelle, dans lequel les métriques de fonctionnement varient sur au moins une partie d'un cycle de vie de l'instance de la deuxième machine virtuelle, dans lequel la deuxième machine virtuelle est une machine virtuelle instanciée à la demande d'un même client que la première machine virtuelle, dans lequel la contrainte de fonctionnement se rapporte à une quantité d'utilisation attendue d'une ressource informatique fournie par un dispositif informatique hôte sur lequel la première machine virtuelle doit être instanciée, dans lequel la contrainte de fonctionnement varie sur au moins une partie d'un cycle de vie de l'instance de la première machine virtuelle ;
recevoir une demande (504) pour instancier la première machine virtuelle ; et
en réponse à la demande :
identifier un dispositif informatique hôte (508), parmi une pluralité de dispositifs informatiques hôtes, le dispositif informatique hôte identifié ayant une ou plusieurs caractéristiques de fonctionnement se rapportant au fonctionnement d'instances de machine virtuelle, l'identification basée partiellement sur le fait de savoir si la ou les caractéristiques de fonctionnement respectent la contrainte de fonctionnement, dans lequel au moins une parmi la ou les caractéristiques de fonctionnement comprend la capacité de mémoire, la capacité d'unité centrale de traitement -UC-,
la largeur de bande de réseau, la latence de réseau, la position au sein d'une topologie de réseau, le jeu d'instructions, ou la variance d'une métrique de performance ; et
en réponse à une identification que le dispositif informatique hôte a une ou plusieurs caractéristiques de fonctionnement qui respectent la
contrainte de fonctionnement, amener une nouvelle instance de la première machine virtuelle à être instanciée sur le dispositif informatique hôte (510).

2. Système selon la revendication 1, dans lequel au moins une des métriques de fonctionnement se rapporte à l'utilisation d'unité centrale de traitement -UC-,
l'utilisation de mémoire, l'utilisation de réseau, l'utilisation de
disque dur, ou l'utilisation d'alimentation électrique.

3. Système selon la revendication 1 ou la revendication 2, dans lequel la quantité d'utilisation attendue est en outre basée sur des données reçues d'un client pour le compte duquel la première machine virtuelle est instanciée.

4. Système selon l'une quelconque des revendications précédentes, dans lequel la mémoire, lorsqu'elle est exécutée, est configurée en outre pour :
recevoir une métrique de fonctionnement supplémentaire concernant le fonctionnement de la nouvelle instance sur le dispositif informatique hôte, la métrique de fonctionnement supplémentaire correspondant à la ou aux caractéristiques de fonctionnement ; et
en réponse à la détermination, sur la base de la métrique de fonctionnement supplémentaire, que la ou les caractéristiques de fonctionnement ne respectent plus la contrainte de fonctionnement, transférer la nouvelle instance vers un deuxième dispositif informatique, le deuxième dispositif informatique ayant une ou plusieurs caractéristiques de fonctionnement supplémentaire qui respectent la contrainte de fonctionnement.

5. Procédé implémenté par ordinateur pour le profilage d'utilisation de ressources informatiques, le procédé implémenté par ordinateur comprenant :
la réception, par un ou plusieurs dispositifs informatiques, d'une demande pour une initialisation d'une machine virtuelle, dans lequel la machine virtuelle a une contrainte de fonctionnement, dans lequel la contrainte de fonctionnement est déterminée à partir d'une pluralité de métriques de fonctionnement déterminées par l'exécution d'au moins une instance d'une deuxième machine virtuelle, dans lequel la deuxième machine virtuelle est une machine virtuelle instanciée à la demande d'un même client que la première machine virtuelle, les métriques de fonctionnement variant sur au moins une partie d'un cycle de vie de l'instance de la deuxième machine virtuelle, dans lequel la contrainte de fonctionnement se rapporte à une quantité d'utilisation attendue d'une ressource informatique fournie par un dispositif informatique hôte sur lequel la première machine virtuelle doit être instanciée, et dans lequel la contrainte de fonctionnement varie sur au moins une partie du cycle de vie de l'instance de la première machine virtuelle ; et
en réponse à la demande :
l'identification d'un dispositif informatique hôte parmi une pluralité de dispositifs informatiques hôtes, le dispositif informatique hôte identifié ayant une ou plusieurs caractéristiques de fonctionnement se rapportant au fonctionnement d'instances de machine virtuelle, l'identification basée partiellement sur le fait de savoir si la ou les caractéristiques de fonctionnement respectent la contrainte de fonctionnement, dans lequel au moins une parmi la ou les caractéristiques de fonctionnement comprend la capacité de mémoire, la capacité d'unité centrale de traitement -UC-,
la largeur de bande de réseau, la latence de réseau, la position
au sein d'une topologie de réseau, le jeu d'instructions, ou la variance d'une métrique de performance ; et
en réponse à l'identification que le dispositif informatique hôte a une ou plusieurs caractéristiques de fonctionnement qui respectent la contrainte de fonctionnement, le fait d'amener une nouvelle instance de la première machine virtuelle à être initialisée sur le dispositif informatique hôte.

6. Procédé implémenté par ordinateur selon la revendication 5, dans lequel la contrainte de fonctionnement comprend une première quantité d'utilisation de ressources attendue d'une première ressource informatique, dans lequel la première quantité d'utilisation de ressources attendue est basée sur une pluralité de métriques de fonctionnement historiques concernant l'utilisation de la première ressource.

7. Procédé implémenté par ordinateur selon la revendication 6, dans lequel chacune parmi la pluralité de métriques de fonctionnement historiques concernant l'utilisation de la première ressource se rapporte à un moment auquel une mesure d'utilisation a été enregistrée, et dans lequel la contrainte de fonctionnement est en outre basée sur le moment auquel chacune parmi la pluralité de métriques de fonctionnement historiques a été enregistrée.

8. Procédé implémenté par ordinateur selon l'une quelconque des revendications 5 à 7, comprenant en outre la détermination de la contrainte de fonctionnement sur la base d'un accord de niveau de service avec un client pour le compte duquel la première machine virtuelle est instanciée.

9. Procédé implémenté par ordinateur selon la revendication 8, comprenant en outre :
la réception d'une métrique de fonctionnement actuelle concernant le fonctionnement de la nouvelle instance sur le dispositif informatique, la métrique de fonctionnement actuelle correspondant à la ou aux caractéristiques de fonctionnement ; et
en réponse à une détermination, sur la base de la métrique de fonctionnement actuelle, qu'aucune parmi la ou les caractéristiques de fonctionnement du dispositif informatique ne correspond à la caractéristique de fonctionnement souhaitée, le transfert de la nouvelle instance vers un deuxième dispositif informatique ayant une caractéristique de fonctionnement correspondant à la caractéristique de fonctionnement souhaitée.

10. Procédé implémenté par ordinateur selon l'une quelconque des revendications 5 à 9, dans lequel la contrainte de fonctionnement comprend une première contrainte de fonctionnement prédéfinie parmi une pluralité de contraintes de fonctionnement prédéfinies.

11. Procédé implémenté par ordinateur selon la revendication 10, dans lequel les contraintes de fonctionnement prédéfinies se rapportent à des niveaux dans une hiérarchie de fonctionnement, et dans lequel la première contrainte de fonctionnement prédéfinie se rapporte à un niveau plus élevé, par rapport à la nouvelle instance de la première machine virtuelle, de la hiérarchie de fonctionnement.

12. Procédé implémenté par ordinateur selon l'une quelconque des revendications 5 à 11, dans lequel la contrainte de fonctionnement comprend une contrainte de fonctionnement spécifique du client, et dans lequel la pluralité de métriques de fonctionnement historiques se rapportent à une initialisation ou utilisation de la nouvelle instance de la première machine virtuelle par le client.
